# EUROPÄISCHE PATENTSCHRIFT

(11) **EP 1 068 467 B1**
(45) Veröffentlichungstag und Bekanntmachung des Hinweises auf die Patenterteilung: **12.03.2008**
(21) Anmeldenummer: 99916855.2
(22) Anmeldetag: 22.03.1999
(51) Int. Cl.: F16L 41/00, F16L 41/06, G01F 15/18, G01F 15/00, E03B 7/07

(54) **VORRICHTUNG ZUM NACHTRÄGLICHEN EINBAU EINES FLUIDZÄHLERS IN EINE ROHRLEITUNG**
DEVICE FOR SUBSEQUENTLY INSTALLING A FLUID METER IN A PIPELINE
DISPOSITIF POUR LE MONTAGE ULTERIEUR D'UN DEBITMETRE DANS UNE CANALISATION

(30) Priorität: 31.03.1998 DE 19814341
(43) Veröffentlichungstag der Anmeldung: 17.01.2001
(73) Patentinhaber: Beninga, Ewald, 60549 Frankfurt (DE)
(72) Erfinder: Beninga, Ewald, 60549 Frankfurt (DE)
(74) Vertreter: Patentanwälte Möll und Bitterich
(86) Internationale Anmeldenummer: PCT/EP1999/001904
(87) Internationale Veröffentlichungsnummer: WO 1999/050584

(56) Entgegenhaltungen:
- EP-A- 0 327 972
- EP-A- 0 344 777
- BE-A- 1 004 967
- DE-A- 3 242 763
- DE-A- 3 541 436
- DE-U- 29 801 734
- NL-A- 9 401 549
- PATENT ABSTRACTS OF JAPAN vol. 016, no. 203 (M-1247), 14. Mai 1992 & JP 04 029696 A (OSAKA GAS), 31. Januar 1992

## Beschreibung

### Technisches Gebiet:

Die Erfindung betrifft Vorrichtungen zum nachträglichen Einbau eines Fluidzählers in eine unter Druck stehende Rohrleitung.

### Stand der Technik:

Aus der EP-A 344 777, der DE-C 36 27 393 oder der DE-A 32 42 763 sind Vorrichtungen bekannt, mit deren Hilfe eine Fluidzähler, beispielsweise eine Wasseruhr, nachträglich in eine Rohrleitung eingesetzt werden kann. Voraussetzung hierfür ist, dass in der Rohrleitung bereits ein T-Stück von einem Absperrventil vorhanden ist. Nach dem Abschrauben des Ventilkopfes wird auf das T-Stück eine Abzweigarmatur aufgeschraubt, an deren Oberseite der Fluidzähler sitzt. Im Inneren der Abzweigarmatur befindet sich ein Einsatz, der das Fluid aus der Rohrleitung ausleitet und es nach Durchströmen des Fluidzählers wieder in die Rohrleitung zurückleitet.

Aus der EP 0 344 777 A ist ein Einsatzteil bekannt, mit dessen Hilfe eine Wasseruhr nachträglich in Rohrleitungssysteme eingeschleift werden kann. Um ein vermischungsfreies Messen der durchfließenden Wassermenge zu erreichen, wird das Einsatzteil mit Hilfe von Dichtungen in den Stegstutzen des T-Stücks eingeschoben. Durch das Einsatzteil wird der Querschnitt des Stegstutzens in zwei voneinander getrennte Wasserführungskanäle aufgeteilt, von denen der eine als Wasserzufluss von der Wasserleitung zur Wasseruhr, der andere als Rückfluss von der Wasseruhr in die Wasserleitung dient. Voraussetzung ist, dass in der Rohrleitung bereits T-Stücke vorhanden sind.

Aus der EP 0 327 972 A ist eine kombinierte Absperrventil- und Durchflussmesseinrichtung für eine Wasserversorgung bekannt. Die Einrichtung besteht aus einem äußeren Gehäuse, welches dazu bestimmt ist, in den Boden eingegraben zu werden, wobei die obere Öffnung zugänglich bleibt. In dem äußeren Gehäuse befinden sich das Ventil und der Wasserzähler. Das Ventil ist ein Kükenventil mit einem Gehäuse, in dem ein Küken drehbar gelagert ist. Der Wasserzähler ist auf dem Kükenventil montiert. Durch Drehen des Kükens können die wasserführenden Durchlässe gesperrt und geöffnet werden. Diese kombinierte Vorrichtung setzt voraus, dass das Außengehäuse in einem getrennten Arbeitsvorgang mit der Wasserversorgungsleitung verbunden wurde.

Voraussetzung für die Verwendung der vorgenannten Ventilzähler ist, dass in der Rohrleitung bereits das T-Stück eines Absperrventils bzw. ein komplettes Außengehäuse vorhanden ist. Fehlt ein solches Absperrventil bzw. Gehäuse, ist der nachträgliche Einbau eines Fluidzählers nur mit umfangreichen Stemm-, Schneid-, Schweiß- und Lötarbeiten möglich. In beiden Fällen muss die Fluidleitung abgesperrt und entleert werden. Dies ist unbefriedigend.

Aus der DE 29 801 734 U, veröffentlicht am 30.04. 1998, ist eine Vorrichtung zur Anbringung von Zählern an einer Leitung bekannt. Diese Vorrichtung umfasst eine Abzweigarmatur mit zwei auf die Rohrleitung aufsetzbaren Dichtstutzen.

### Darstellung der Erfindung:

Der vorliegenden Erfindung liegt daher die Aufgabe zugrunde, eine Vorrichtung der eingangs genannten Art anzugeben, die den nachträglichen Einbau von Fluidzählern auch dann ermöglicht, wenn kein T-Stück oder Gehäuse vorhanden ist und die Fluidleitung unter Druck steht.

Diese Aufgabe wird gelöst durch eine Vorrichtung mit den Merkmalen des Anspruchs 1.

Anbohrarmaturen, mit deren Hilfe an unter Druck stehenden Gas- oder Wasserleitungen nachträglich Anschlussstellen hergestellt werden können, sind seit über 100 Jahren bekannt. Man vergleiche beispielsweise US 463 524, DE-U 93 16 819, DE-U 74 10 858, DE-A 25 15 235 oder GB 13 67 074. Alle diese Anbohrarmaturen besitzen benachbart zu der angebohrten Rohrleitung ein Absperrelement. Bei der US 463 524 handelt es sich um einen Plattenschieber, bei den neueren Schriften generell um einen Kugelhahn. Trotz gewisser Ähnlichkeiten zwischen der erfindungsgemäßen Vorrichtung und den vorbekannten Anbohrarmaturen sind die bekannten Anbohrarmaturen für den erfindungsgemäßen Einsatz nicht geeignet.

Dank der vorliegenden Erfindung lässt sich jede Fluidleitung, gleichgültig ob sie unter Putz oder auf Putz verlegt ist, nachträglich mit einem Fluidzähler ausrüsten, und zwar ohne dass die Fluidleitung abgesperrt und entleert werden muss.

Ein weiterer Vorteil der erfindungsgemäßen Vorrichtung ist, dass sie auch dazu benutzt werden kann, die Fluidzähler nach dem Ablauf der gesetzlichen Eichdauer auszuwechseln, ebenfalls ohne die Rohrleitung absperren und entleeren zu müssen.

Gemäß einer Ausgestaltung der Erfindung ist das Material der Abzweigarmatur an das der Rohrleitung angepasst. Durch diese Maßnahme kann Spannungskorrossion vermieden werden. Der Hauptgrund für diese Maßnahme ist jedoch die in der überwiegenden Zahl der Fälle erforderliche elektrische Verbindung zwischen Rohrleitung und Armatur.

Gemäß einer bevorzugten Ausgestaltung der Erfindung sind die Durchmesser des Abzweigstutzens und des Fräskopfes größer als der Durchmesser der Rohrleitung. Auf diese Weise wird die Rohrleitung komplett durchtrennt und der die Strömungen teilende Einsatz dichtet gegen die Abzweigarmatur, nicht gegen die Rohrleitung. Dadurch können die Dichtflächen optimal aneinander angepasst werden.

Vorteilhafterweise besitzt der Abzweigstutzen eine Fortsetzung unterhalb der Rohrleitung. Auch dies dient in erster Linie dazu, das völlige Durchtrennen der Rohrleitung zu ermöglichen, ohne dass die Abzweigarmatur beschädigt werden kann.

Es versteht sich, dass der strömungslenkende Einsatz, mit dessen Hilfe das Fluid aus der Rohrleitung ausgeleitet und nach Durchströmen des Fluidzählers wieder in die Rohrleitung zurückgeleitet wird, von besonderer Wichtigkeit ist. Dieser Einsatz muss z. B. sicherstellen, dass keine Bypass-Strömung am Fluidzähler vorbei auftreten kann.

Gemäß einer ersten Ausgestaltung handelt es sich dabei um einen Zylinder mit einer innenliegenden Trennwand. Zylinder und Trennwand bilden einen Zuströmkanal mit einer mit der Rohrleitung fluchtenden Eingangsöffnung und einen Abströmkanal mit einer mit der Rohrleitung fluchtenden Ausgangsöffnung. Dabei ist der Fluidzähler auf den Zylinder dicht aufsetzbar.

Zylinder und Trennwand können vorteilhafterweise aus zwei zusammengesteckten Teilen bestehen.

Gemäß einer alternativen Ausgestaltung umfasst der strömungslenkende Einsatz eine Trennwand und eine mit der Trennwand verbundene, den Abzweigstutzen verschließende Dichtplatte, die in den Abzweigstutzen und gegebenenfalls dessen Fortsetzung fluiddicht einsetzbar sind. Die Dichtplatte ist auf der Zuströmseite offen. Auf der Abströmseite besitzt sie eine zentrale Öffnung, die mit dem Auslauf des Fluidzählers korrespondiert. Dieser Einsatz benötigt wenig Platz, so dass der für die Fluidströmung zur Verfügung stehende Querschnitt entsprechend groß ist.

Vorzugsweise ist der Einsatz mittels Profildichtung in den Abzweigstutzen abgedichtet. Diese Profildichtung besitzt etwa U-Form. U-förmige Profildichtungen sind beispielsweise bei Absperrschiebern verbreitet.

Gemäß einer vorteilhaften Ausgestaltung besitzt die Innenwand des Abzweigstutzens Führungsnuten oder Führungsleisten für die Trennwand. Auf diese Weise können z. B. Druckstöße in der Rohrleitung die Position der Trennwand nicht verändern.

Gemäß einer Weiterbildung der Erfindung ist in den Einsatz ein Rückstromsperrventil integriert, vorzugsweise unmittelbar hinter dem Auslauf des Fluidzählers.

Falls der Wunsch besteht, die Temperatur des Fluids zu messen, lässt sich in eine vorbereitete Bohrung des Abzweigstutzens ein Temperaturmessfühler einsetzen.

Falls der Wunsch bestehen sollte, die Fluidströmung abzusperren, kann in die Zuströmseite und/oder in die Abströmseite des Abzweigstutzens ein Absperrventil eingesetzt werden. Dies macht es möglich, den Fluidzähler auszuwechseln, ohne die Schleusenarmatur zu verwenden.

Eine besonders einfache Anordnung ergibt sich, wenn das Absperrventil eine mittels Fluid aufblasbare Blase ist. Diese Absperrblase wird mittels einer Druckpumpe aufgeblasen. Das Entleeren der Absperrblase besorgt der Innendruck der Rohrleitung.

Soll ein Absperrventil außerhalb des Abzweigstutzens angeordnet werden, so kann es in den bzw. die Dichtstutzen integriert werden. Hierzu ist neben dem Abzweigstutzen wenigstens ein Ventilstutzen vorgesehen, auf den wahlweise die Schleusenvorrichtung mit Fräser zum An- bzw. Durchbohren der Rohrleitung oder ein Ventildeckel aufsetzbar ist. Dabei besitzt der Ventildeckel eine Öffnung für die Ventilbetätigung. Konstruktion und Arbeitsweise entsprechen dem, was in Bezug auf den Abzweigstutzen erläutert worden ist.

Gemäß einer ersten Ausgestaltung der Erfindung ist in den Ventilstutzen ein quer durchbohrtes Zylinderküken drehbar eingedichtet.

Eine alternative Ausgestaltung sieht ein Kolbenventil mit Kolbenstange vor.

Die längsgeteilten Dichtstutzen der Abzweigarmatur sind mit herkömmlichen Mitteln schließbar, beispielsweise mit Schrauben und Muttern oder auch mit Spannbändern.

Um zu verhindern, dass beim Anbohren der Rohrleitung Metallsplitter mit der Fluidströmung weggetragen werden, kann am Fräskopf ein Permanentmagnet angebracht werden.

### Kurze Beschreibung der Zeichnungen:

Anhand der Zeichnung soll die Erfindung in Form von Ausführungsbeispielen näher erläutert werden. Es zeigen jeweils rein schematisch
- Fig. 1: einen Längsschnitt durch eine Rohrleitung mit aufgesetzter erster Abzweigarmatur und auf diese aufgesetzter Schleusenarmatur,
- Fig. 2: eine gegenüber Fig. 1 im Maßstab vergrößerte, detailliertere Darstellung,
- Fig. 3: einen Teilquerschnitt durch eine Rohrleitung mit aufgesetzter zweiter Abzweigarmatur und auf diese aufgesetzter Schleusenarmatur,
- Fig. 4: einen Längsschnitt durch Rohrleitung und Abzweigarmatur der Fig. 3 mit aufgesetztem Fluidzähler,
- Fig. 5: einen Längsschnitt durch eine Rohrleitung mit aufgesetzter dritter Abzweigarmatur, die mit zwei Absperrblasen ausgerüstet ist, und
- Fig. 6: einen Längsschnitt durch eine Rohrleitung mit aufgesetzter vierter Abzweigarmatur, die mit zwei zusätzlichen Absperrventilen ausgerüstet ist.

### Wege zur Ausführung der Erfindung und gewerbliche Verwertbarkeit:

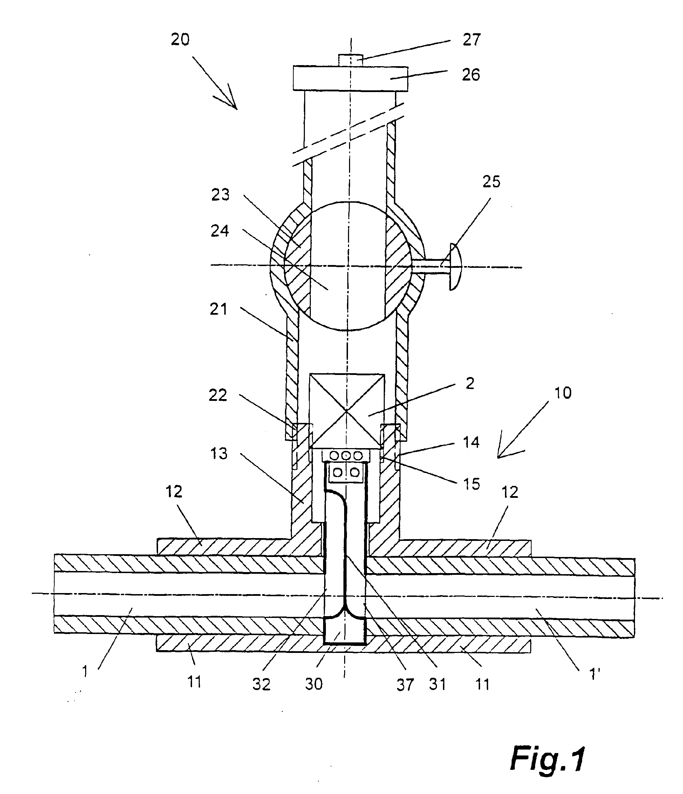

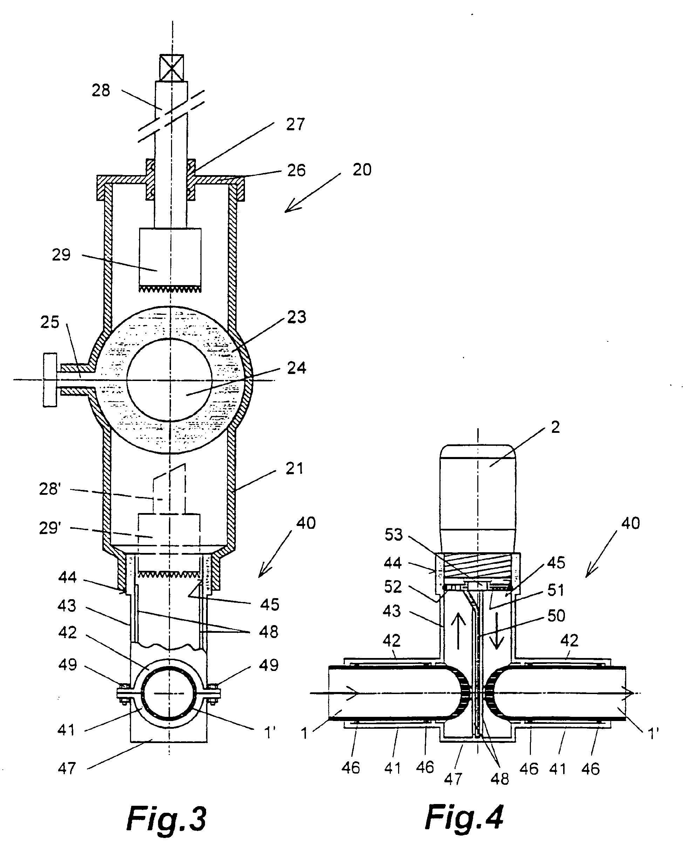

Fig. 1 zeigt einen Längsschnitt durch eine Rohrleitung 1, 1', auf der eine erste Abzweigarmatur 10 dicht aufgesetzt ist. Die Abzweigarmatur 10 besteht aus zwei auf die Rohrleitung 1, 1' fluiddicht aufgesetzten Dichtstutzen 11, 12. Diese sind längs der Rohrleitung 1,1' längsgeteilt, so dass die Abzweigarmatur 10 nachträglich auf jede Rohrleitung aufgesetzt werden kann. Die Befestigung erfolgt mit Hilfe von Schrauben 49 (Fig. 3), Spannbändern oder dergleichen.

Wesentliches Element der Abzweigarmatur 10 ist ein Abzweigstutzen 13. Dieser besitzt ein Außengewinde 14 und ein Innengewinde 15. Auf das Außengewinde 14 ist eine Schleusenarmatur 20 dicht aufgesetzt. Die Schleusenarmatur 20 besteht aus einem zylindrischen Stutzen 21, einem Kugelhahn 23, 24, 25 und einem dicht aufschraubbaren Deckel 26 mit Führungsstutzen 27. Die Schleusenarmatur 20 soll anhand der Fig. 3 noch näher erläutert werden.

Im Inneren des Abzweigstutzens 13 erkennt man einen zylindrischen Einsatz 30. Dieser besitzt eine innere Trennwand 31. Durch eine Einlassöffnung 32 tritt das in der Rohrleitung 1 fließende Fluid in den Einsatz 30 und von diesem in den Abzweigstutzen 13 ein. Über eine Auslassöffnung 37 tritt das Fluid in die weiterführende Rohrleitung 1' aus.

Im Inneren des Abzweigstutzens 13 erkennt man einen Fluidzähler 2, der auf das Innengewinde 15 aufgeschraubt ist. Der Fluidzähler 2 wurde durch den geöffneten Kugelhahn 23 der Schleusenarmatur 20 hindurch eingesetzt. Der Fluidzähler 2 ist sowohl gegen den Abzweigstutzen 13 als auch gegen den zylindrischen Einsatz 30 abgedichtet, so dass die Schleusenarmatur 20 jetzt abgenommen werden kann. Auf diese Weise wird das Fluid in der Rohrleitung 1, 1' durch den Fluidzähler 2 geleitet und gezählt.

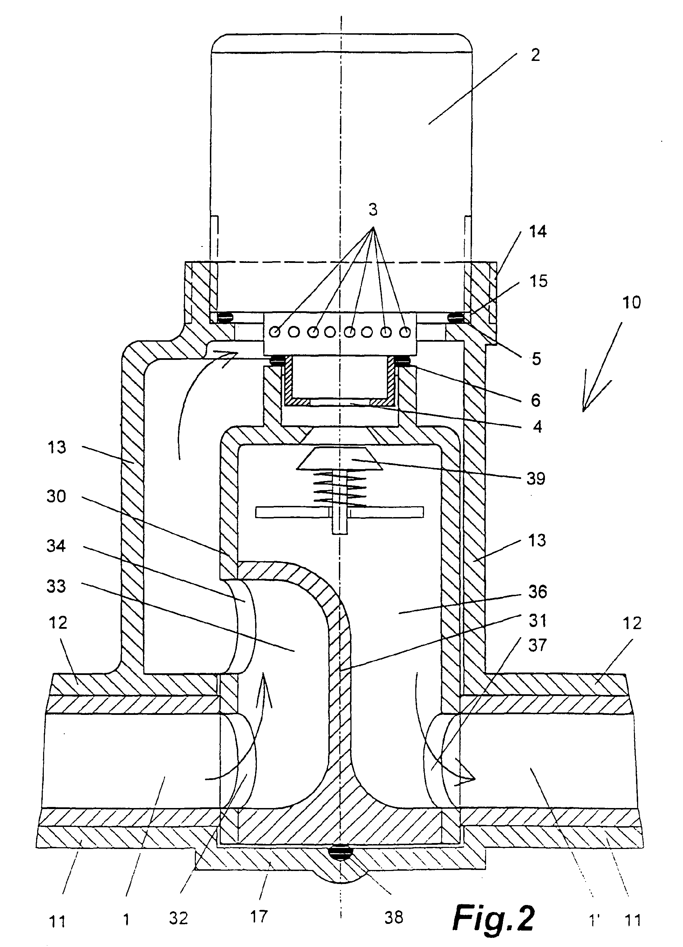

Fig. 2 zeigt einen Teillängsschnitt durch die Fig. 1 in vergrößertem Maßstab. Man erkennt die Rohrleitung 1, 1', die Dichtstutzen 11, 12, den Abzweigstutzen 13, den zylindrischen Einsatz 30 mit innerer Trennwand 31, Einlaßöffnung 32, Zuströmkanal 33, Ausströmöffnung 34, mit Abströmkanal 36 und Auslassöffnung 37 zur Rohrleitung 1'. Man erkennt des weiteren den Fluidzähler 2, der mit Hilfe von O-Ringen 5, 6 sowohl gegen den Abzweigstutzen 13 als auch gegen den Einsatz 30 abgedichtet ist. Der Flüssigkeitszähler 2 besitzt radiale Einströmöffnungen 3 und einen koaxialen Auslass 4.

Hinter dem Auslass 4 des Fluidzählers 2 ist in den zylindrischen Einsatz 30 ein Rückstromsperrventil 39 integriert. Dadurch kann ein etwaiges Rückwärtslaufen des Fluidzählers 2 verhindert werden.

Wie Fig. 2 ferner erkennen lässt, besitzt der Abzweigstutzen 13 unterhalb der Rohrleitung 1, 1' eine kurze Fortsetzung 17. Diese Fortsetzung 17 ermöglicht ein völliges Durchtrennen der Rohrleitung 1, 1' ohne Beschädigung der Abzweigarmatur 10.

Eine Dichtung 38 sorgt für die erforderliche Abdichtung zwischen der Zuströmseite und der Abströmseite der Abzweigarmatur 10.

Fig. 3 zeigt die Rohrleitung 1, 1' mit aufgesetzter zweiter Abzweigarmatur 40, die teilweise geschnitten ist.

Zunächst erkennt man die längs der Rohrleitung 1, 1' längsgeteilten Dichtstutzen 41, 42, die mit Hilfe von Schrauben und Muttern 49 zusammengefügt sind. Dichtringe 46 (Fig. 4) stellen die erforderliche Abdichtung her.

Auf das Außengewinde 44 des Abzweigstutzens 43 ist die Schleusenarmatur 20 dicht aufgeschraubt. Der Kugelhahn 23 mit großer Durchgangsöffnung 24, der mit Hilfe einer Achse 25 geöffnet und geschlossen werden kann, befindet sich im geschlossenen Zustand. Zwischen Kugelhahn 23 und Deckel 26 befindet sich ein Fräskopf 29, befestigt an einer Betätigungsstange 28.

Sobald der Fräskopf 29 an der Betätigungsstange 28 montiert und der Deckel 26 dicht aufgeschraubt ist, wird der Kugelhahn 23 geöffnet. Der Fräskopf 29 wird durch den Kugelhahn 23 und den Abzweigstutzen 43 nach unten gefahren, wie durch die Positionen 28' und 29' angedeutet. Mit Hilfe des Fräskopfes 29 wird dann die Rohrleitung 1, 1' durchtrennt. Dabei anfallende Metallteile werden durch einen in den Fräskopf 29 integrierten Permanentmagneten festgehalten. Da die Abzweigarmatur 40 und die Schleusenarmatur 20 allseitig abgedichtet sind, kann kein Fluid austreten.

Sobald die Rohrleitung 1, 1' durchtrennt ist, wird der Fräskopf 29 wieder ganz zurückgezogen. Nach Schließen des Kugelhahns 23 wird der Deckel 26 abgeschraubt und der Fräskopf 29 von der Betätigungsstange 28 abgenommen. Anstelle des Fräskopfes 29 werden dann nacheinander Halter (nicht dargestellt) für den strömungslenkenden Einsatz 30, 50 und Fluidzähler 2 angebracht.

Fig. 4 zeigt in einem Längsschnitt die Situation, nachdem die Abzweigarmatur 40 vervollständigt und der Fluidzähler 2 montiert ist.

Nach dem Durchtrennen der Rohrleitung 1, 1' wurde mit Hilfe der Betätigungsstange zunächst ein strömungslenkender Einsatz in Form einer Trennwand 50 mit querliegendem Dichtteller 51 in den Abzweigstutzen 43 eingeführt. Halteleisten 48 und Profildichtungen (nicht dargestellt) sorgen für eine einwandfreie allseitige Abdichtung zwischen dem Abzweigstutzen 43 bzw. dessen Fortsetzung 47 und dem Einsatz 50.

Zuströmseitig besitzt die Dichtplatte 51 Öffnungen 52, durch die das Fluid zum Fluidzähler 2 gelangt. Abströmseitig besitzt die Dichtplatte 51 eine zentrale Öffnung 53, die mit dem Auslauf des Fluidzählers 2 korrespondiert. Auf diese Weise ist sichergestellt, dass das in dem Rohrleitungsabschnitt 1 zufließende Fluid den Fluidzähler 2 durchströmen muss, bevor es in die wegführende Rohrleitung 1' gelangt.

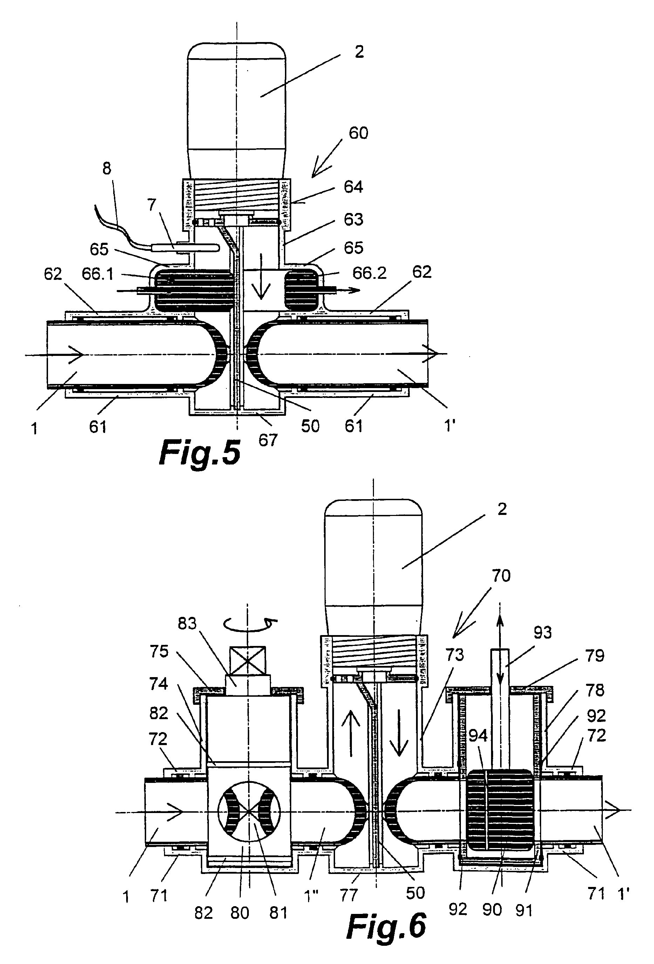

Fig. 5 zeigt einen Längsschnitt durch eine Rohrleitung 1, 1' mit aufgesetzter dritter Abzweigarmatur 60. Die Abzweigarmatur 60 entspricht im wesentlichen der der Fig. 4. Zusätzlich erkennt man jedoch in dem Abzweigstutzen 63 eine seitliche Öffnung, durch die ein Temperaturmessfühler 7 mit angeschlossenem Kabel 8 eingeführt ist. Auf diese Weise ist es möglich, die Temperatur des Fluids zu messen.

Im Abzweigstutzen 63 erkennt man des weiteren sowohl auf der Zuström- als auch auf der Abströmseite eine Blase 66.1, 66.2. Beide Blasen 66.1, 66.2 sind durch eine entsprechende Gehäuseerweiterung 65 gehalten und geführt. Die Blasen 66.1, 66.2 können mit Hilfe eines Fluids, beispielsweise Luft oder Wasser, aufgepumpt werden, bis sie den gesamten Strömungsquerschnitt zwischen Abzweigstutzen 63 und strömungslenkendem Einsatz 50 ausfüllen. Auf diese Weise lässt sich der Fluiddurchfluss komplett absperren, so dass der Fluidzähler 2 abgenommen werden kann, auch ohne dass die Schleusenarmatur 20 verwendet werden muss.

Üblicherweise werden beide Absperrblasen 66.1, 66.2 gleichzeitig aufgeblasen, um den Einsatz 50 kräftemäßig zu entlasten.

Werden die Absperrblasen 66.1, 66.2 nicht mehr benötigt, so genügt es, sie zu öffnen. Die Blasen werden dann durch den Innendruck der Rohrleitung 1, 1' wieder entleert.

Fig. 6 zeigt ebenfalls als Längsschnitt eine vierte Abzweigarmatur 70. Die Konstruktion im Bereich des Abzweigstutzens 73 entspricht der der Fig. 4. Neben dem Abzweigstutzen 73 erkennt man jedoch zwei Ventilstutzen 74, 78, die im Bereich der Dichtstutzen 71, 72 angeordnet sind. Diese Ventilstutzen 74, 78 sind mit einem Außengewinde versehen, auf das entweder die Schleusenarmatur 20, wenn die Rohrleitung 1, 1', 1" durchtrennt werden soll, oder ein Ventildeckel 75, 79 dicht aufgeschraubt werden kann.

In den linken Ventilstutzen 74 ist ein zylindrisches Ventilküken 80 drehbar eingedichtet. Dieses besitzt eine Querbohrung 81. Mit Hilfe der Betätigungsvorrichtung 83 kann das Küken 80 wahlweise in die gezeichnete Sperrstellung oder in die Offenstellung gebracht werden.

In den rechten Ventilstutzen 78 wurde als weiteres Ausführungsbeispiel ein Kolbenventil eingedichtet. Dieses umfasst zunächst einen Zylinder 91, der mit Hilfe von Dichtringen 92 gegen den Ventilstutzen 78 abgedichtet ist. Im Zylinder 91 befindet sich ein Kolben 90, der mit Hilfe einer Betätigungsstange 93 zwischen der gezeichneten Sperrstellung und der Offenstellung verschoben werden kann. Eine Bohrung 94 im Kolben 90 sorgt für die nötige Druckentlastung.

## Patentansprüche

1. Vorrichtung zum nachträglichen Einbau eines Fluidzählers (2) in eine unter Druck stehende Rohrleitung (1, 1', 1"), mindestens umfassend
- eine Abzweigarmatur (10, 40, 60, 70) mit zwei auf die Rohrleitung (1, 1', 1") fluiddicht aufsetzbaren Dichtstutzen, (11, 12; 41, 42; 61, 62; 71, 72),
- und einen strömungslenkenden Einsatz (30, 50), der das Fluid aus der Rohrleitung (1, 1") ausleitet, dem Fluidzähler (2) zuleitet und schließlich wieder in die Rohrleitung (1') zurückleitet,
wobei
- die Dichtstutzen (11, 12; 41, 42; 61, 62; 71, 72) längs der Rohrleitung (1, 1', 1") längsgeteilt sind,
- die Abzweigarmatur (10, 40, 60, 70) einen Abzweigstutzen (13, 43, 63, 73) mit einem Innengewinde (15, 45, 65, 75) besitzt welches mit einem Gewinde am Fluidzähler (2) korrespondiert,
- der Abzweigstutzen (13, 43, 63, 73) ein Außengewinde (14, 44, 64, 74) besitzt,
- der strömungslenkende Einsatz (30, 50)
- einen stirnseitigen Anschluss (53) für den Fluidzähler (2), und
- zwei Strömungskanäle (33, 36) besitzt, die durch eine axial verlaufende Trennwand (31, 50) voneinander getrennt sind.

2. Vorrichtung nach Anspruch 1, **gekennzeichnet durch** das Merkmal:
- der Abzweigstutzen (13, 43, 63, 73) besitzt eine Fortsetzung (17, 47, 67, 77) unterhalb der Rohrleitung (1, 1', 1").

3. Vorrichtung nach Anspruch 1 oder 2, **gekennzeichnet durch** das Merkmal:
- der strömungslenkende Einsatz ist ein Zylinder (30) mit einer innenliegenden Trennwand (31), bildend
- einen Zuströmkanal (33) mit einer mit der Rohrleitung (1) fluchtenden Eingangsöffnung (32)
- und einen Abströmkanal (36) mit einer mit der Rohrleitung (1') fluchtenden Ausgangsöffnung (37),
- der Fluidzähler (2) ist auf den Zylinder (30) dicht aufsetzbar.

4. Vorrichtung nach Anspruch 1, 2 oder 3, **gekennzeichnet durch** das Merkmal:
- Zylinder (30) und Trennwand (31) sind aus zwei Teilen zusammengesteckt.

5. Vorrichtung nach einem der Ansprüche 1 bis 4, **gekennzeichnet durch** das Merkmal:
- der strömungslenkende Einsatz umfasst
- eine Trennwand (50), die in den Abzweigstutzen (43, 63, 73) und gegebenenfalls dessen Fortsetzung (47, 67, 77) fluiddicht einsetzbar ist,
- und eine mit der Trennwand (50) verbundene, den Abzweigstutzen (43, 63, 73) verschließende Dichtplatte (51),
- die Dichtplatte (51)
- ist auf der Zuströmseite offen
- und besitzt auf der Abströmseite eine zentrale Öffnung (53), die mit dem Auslauf (4) des Fluidzählers (2) korrespondiert.

6. Vorrichtung nach Anspruch 5, **gekennzeichnet durch** das Merkmal:
- die Trennwand (50) ist mittels Profildichtung gegen den Abzweigstutzen (43, 63, 73) abgedichtet.

7. Vorrichtung nach Anspruch 5 oder 6, **gekennzeichnet durch** das Merkmal:
- die Innenwand des Abzweigstutzens (43, 63, 73) besitzt Führungsnuten oder Führungsleisten (48) für die Trennwand (50).

8. Vorrichtung nach Anspruch 1, **gekennzeichnet durch** das Merkmal:
- die längsgetellten Dichtstutzen (11, 12; 41, 42; 61, 62; 71, 72) sind mittels Schrauben (49) schließbar.

9. Vorrichtung nach Anspruch 1, **gekennzeichnet durch** das Merkmal:
- die längsgeteilten Dichtstutzen (11, 12; 41, 42; 61, 62; 71, 72) sind mittels Spannbänder schließbar.

10. Vorrichtung nach einem der Ansprüche 5 bis 9, **gekennzeichnet durch** das Merkmal:
- in den Einsatz (30, 50) ist ein Rückstromsperrventil (39) integriert.

11. Vorrichtung nach einem der Ansprüche 5 bis 10, **gekennzeichnet durch** das Merkmal:
- in den Abzweigstutzen (63) ist ein Temperaturmessfühler (7, 8) eingesetzt.

12. Vorrichtung nach einem der Ansprüche 1 bis 11, **gekennzeichnet durch** das Merkmal:
- in die Zuströmseite und/oder in die Abströmseite des Abzweigstutzens (63) ist ein Absperrventil eingesetzt.

13. Vorrichtung nach Anspruch 12, **gekennzeichnet durch** das Merkmal:
- das Absperrventil ist eine mittels Fluid aufblasbare Blase (66.1, 66.2).

14. Vorrichtung nach einem der Ansprüche 1 bis 13, **gekennzeichnet durch** die Merkmale:
- im Dichtstutzen (71, 72) ist wenigstens ein Ventilstutzen (74, 78) vorgesehen,
-- auf den Ventilstutzen (74, 78) ist wahlweise aufsetzbar
-- eine Schleusenvorrichtung mit Fräser zum An- bzw. Durchbohren der Rohrleitung (1, 1', 1")
-- oder ein Ventildeckel (75, 79),
- der Ventildeckel (75, 79) besitzt eine Öffnung für die Ventilbetätigung (83, 93).

15. Vorrichtung nach Anspruch 14, **gekennzeichnet durch** das Merkmal:
- in den Ventilstutzen (74) ist ein quer durchbohrtes Zylinderküken (80) drehbar eingedichtet.

16. Vorrichtung nach Anspruch 14, **gekennzeichnet durch** das Merkmal:
- in den Ventilstutzen (78) ist ein Kolbenventil (90) mit Kolbenstange (93) eingedichtet.

17. Vorrichtung nach Anspruch 1 oder 2, **gekennzeichnet durch** das Merkmal:
- der Durchmesser des Abzweigstutzens (43, 63, 73) ist größer als der Durchmesser der Rohrleitung (1, 1', 1").

## Claims

1. An apparatus for the retrofitting of a fluid meter (2) in a pressurised pipeline (1,1',1"), at least comprising
- a branch fitting (10,40,60,70) with two sealing stubs (11,12;41,42;61,62;71,72) which can be mounted fluidtightly on the pipeline (1,1',1"),
- and a flow-directing insert (30,50) which directs the fluid from the pipeline (1,1"), conducts it to the fluid meter (2) and, finally, directs it back into the pipeline (1'),
- wherein the sealing stubs (11,12;41,42;61,62;71,72) are separated longitudinally along the pipeline (1,1',1"),
- the branch fitting (10,40,60,70) has a branch stub (13,43,63,73) with an internal screw-thread (15,45,65, 75) which corresponds to a screw-thread on the fluid meter (2),
- the branch stub (13,43,63,73) has an external screw-thread (14,44,64,74),
- the flow-directing insert (30,50) has an end connector (53) for the fluid meter (2), and two flow ducts (33,36) which are separated from one another by an axially extending separating wall (31,50).

2. An apparatus according to Claim 1, **characterised by** the feature:
- the branch stub (13,43,63,73) has an extension (17,47, 67,77) below the pipeline (1,1',1").

3. An apparatus according to Claim 1 or 2, **characterised by** the feature:
- the flow-directing insert is a cylinder (30) with an internal separating wall (31), forming
- an inflow duct (33) with an inlet opening (32) aligned with the pipeline (1),
- and an outflow duct (36) with an outlet opening (37) aligned with the pipeline (1'),
- the fluid meter (2) can be mounted fluidtightly on the cylinder (2).

4. An apparatus according to Claim 1,2 or 3, **characterised by** the feature:
- the cylinder (30) and the separating wall (31) are fitted together from two parts.

5. An apparatus according to any one of Claims 1 to 4, **characterised by** the feature:
- the flow-directing insert comprises
- a separating wall (50) which can be inserted fluidtightly into the branch stub (43,63,73) and optionally its extension (47,67,77),
- and a sealing plate (51) connected with the separating wall (50) and closing the branch stub (43, 63, 73),
- the sealing plate (51)
- is open on the inflow side
- and has on the outflow side a central opening (53) which corresponds to the outlet (4) of the fluid meter (2).

6. An apparatus according to Claim 5, **characterised by** the feature:
- the separating wall (50) is sealed by means of profile sealing against the branch stub (43,63,73).

7. An apparatus according to Claim 5 or 6, **characterised by** the feature:
- the inner wall of the branch stub (43,63,73) has guide grooves or guide strips (48) for the separating wall (50).

8. An apparatus according to Claim 1, **characterised by** the feature:
- the longitudinally separated sealing stubs (11,12;41, 42;61,62;71,72) can be closed by means of screws (49).

9. An apparatus according to Claim 1, **characterised by** the feature:
- the longitudinally separated sealing stubs (11,12;41, 42;61,62;71,72) can be closed by means of clamping straps.

10. An apparatus according to any one of Claims 5 to 9, **characterised by** the feature:
- a non-return valve (39) is integrated into the insert (30, 50).

11. An apparatus according to any one of Claims 5 to 10, **characterised by** the feature:
- a temperature sensor (7,8) is inserted into the branch stub (63).

12. An apparatus according to any one of Claims 1 to 11, **characterised by** the feature:
- a shut-off valve is inserted in the inflow side and/or in the outflow side of the branch stub (63).

13. An apparatus according to Claim 12, **characterised by** the feature:
- the shut-off valve is a bladder (66.1,66.2) which can be inflated by means of fluid.

14. An apparatus according to any one of Claims 1 to 13,
**characterised by** the features:
- at least one valve stub (74,78) is provided in the sealing stub (71,72),
-- on the valve stub (74,78) there can optionally be mounted
-- a lock device with a milling cutter for drilling into and through the pipeline (1,1',1")
-- or a valve cover (75,79),
- the valve cover (75,79) has an opening for the valve actuation (83,93).

15. An apparatus according to Claim 14, **characterised by** the feature:
- a cross-bored cylindrical plug (80) is mounted rotatably and in a sealed manner in the valve stub (74) .

16. An apparatus according to Claim 14, **characterised by** the feature:
- a piston valve (90) with a piston rod (93) is mounted in a sealed manner in the valve stub (78).

17. An apparatus according to Claim 1 or 2, **characterised by** the feature:
- the diameter of the branch stub (43,63,73) is greater than the diameter of the pipeline (1,1',1").

## Revendications

1. Dispositif pour le montage ultérieur d'un débitmètre (2) dans une conduite tubulaire (1, 1', 1") sous pression, comportant au moins
- un raccord de dérivation (10, 40, 60, 70) avec deux manchons étanches (11, 12 ; 41, 42 ; 61, 62 ; 71, 72) pouvant être posés de manière étanche aux fluides sur la conduite tubulaire (1, 1', 1"),
- et un insert (30, 50) pour guider l'écoulement, par lequel le fluide est guidé hors de la conduite tubulaire (1, 1"), acheminé vers le débitmètre (2) et ramené enfin à nouveau dans la conduite tubulaire (1'),
dans lequel
- les manchons étanches (11, 12 ; 41, 42 ; 61, 62 ; 71, 72) sont divisés dans le sens longitudinal le long de la conduite tubulaire (1, 1', 1"),
- le raccord de dérivation (10, 40, 60, 70) comporte une tubulure de dérivation (13, 43, 63, 73) avec un filetage intérieur (15, 45, 65, 75), lequel coopère avec un filetage sur le débitmètre (2),
- la tubulure de dérivation (13, 43, 63, 73) comporte un filetage extérieur (14, 44, 64, 74),
- l'insert (30, 50) guidant l'écoulement comporte
-- un raccord frontal (53) pour le débitmètre (2), et
-- deux conduits d'écoulement (33, 36), qui sont séparés l'un de l'autre par une cloison (31, 50) orientée dans le sens axial.

2. Dispositif selon la revendication 1, **caractérisé par** la caractéristique :
- la tubulure de dérivation (13, 43, 63, 73) comporte un prolongement (17, 47, 67, 77) en dessous de la conduite tubulaire (1, 1', 1").

3. Dispositif selon la revendication 1 ou 2,
**caractérisé par** la caractéristique :
- l'insert guidant l'écoulement est un cylindre (30) avec une cloison (31) intérieure, formant
-- un conduit d'alimentation (33) avec un orifice d'admission (32) aligné avec la conduite tubulaire (1),
-- et un conduit d'évacuation (36) avec un orifice d'évacuation (37) aligné avec la conduite tubulaire (1'),
- le débitmètre (2) est apte à être monté de manière étanche sur le cylindre (30).

4. Dispositif selon la revendication 1, 2 ou 3,
**caractérisé par** la caractéristique :
- le cylindre (30) et la cloison (31) sont assemblés en deux parties.

5. Dispositif selon l'une quelconque des revendications 1 à 4, **caractérisé par** la caractéristique :
- l'insert guidant l'écoulement comporte
-- une cloison (50) qui peut être insérée de manière étanche aux fluides dans la tubulure de dérivation (43, 63, 73) et, le cas échéant, dans le prolongement (47, 67, 77) de celle-ci,
-- et une plaque d'étanchéité (51) assemblée à la cloison (50) et fermant la tubulure de dérivation (43, 63, 73),
- la plaque d'étanchéité (51)
-- est ouverte sur le côté admission,
-- et comporte sur le côté évacuation une ouverture centrale (53), qui correspond avec la sortie (4) du débitmètre (2).

6. Dispositif selon la revendication 5, **caractérisé par** la caractéristique :
- la cloison (50) est rendue étanche par rapport à la tubulure de dérivation (43, 63, 73) par un joint d'étanchéité profilé.

7. Dispositif selon la revendication 5 ou 6,
**caractérisé par** la caractéristique :
- la paroi intérieure de la tubulure de dérivation (43, 63, 73) comporte des rainures de guidage ou des nervures de guidage (48) pour la cloison (50).

8. Dispositif selon la revendication 1, **caractérisé par** la caractéristique :
- les manchons étanches (11, 12 ; 41, 42 ; 61, 62 ; 71, 72), divisés dans le sens longitudinal, peuvent être fermés par des vis (49).

9. Dispositif selon la revendication 1, **caractérisé par** la caractéristique :
- les manchons étanches (11, 12 ; 41, 42 ; 61, 62 ; 71, 72), divisés dans le sens longitudinal, peuvent être fermés par des bandes de serrage.

10. Dispositif selon l'une quelconque des revendications 5 à 9, **caractérisé par** la caractéristique :
- un clapet de non-retour (39) est intégré dans l'insert (30, 50).

11. Dispositif selon l'une quelconque des revendications 5 à 10, **caractérisé par** la caractéristique :
- un capteur de température (7, 8) est inséré dans la tubulure de dérivation (63).

12. Dispositif selon l'une quelconque des revendications 1 à 11, **caractérisé par** la caractéristique :
- un vanne de fermeture est insérée dans le côté admission et/ou le côté sortie de la tubulure de dérivation (63).

13. Dispositif selon la revendication 12, **caractérisé par** la caractéristique :
- la vanne de fermeture est une vessie (66.1, 66.2) gonflable au moyen d'un fluide.

14. Dispositif selon l'une quelconque des revendications 1 à 13, **caractérisé par** les caractéristique s:
- au moins un manchon formant valve (74, 78) est prévu dans le manchon étanche (71, 72),
- sur le manchon formant valve (74, 78) peut être posé au choix
-- un dispositif formant sas avec une fraise pour amorcer le perçage ou percer de part en part la conduite tubulaire (1,1',1"),
-- ou un couvercle de valve (75, 79),
- le couvercle de valve (75, 79) comporte une ouverture pour l'actionnement (83, 93) de la valve.

15. Dispositif selon la revendication 14, **caractérisé par** la caractéristique :
- dans le manchon formant valve (74) est inséré de manière étanche et rotative un boisseau de robinet cylindrique (80) percé de part en part dans le sens transversal.

16. Dispositif selon la revendication 14, **caractérisé par** la caractéristique :
- une valve à piston (90) avec une tige de piston (93) est insérée de manière étanche dans le manchon formant valve (78).

17. Dispositif selon la revendication 1 ou 2,
**caractérisé par** la caractéristique :
- le diamètre de la tubulure de dérivation (43, 63, 73) est supérieur au diamètre de la conduite tubulaire (1, 1', 1").
